# EUROPEAN PATENT APPLICATION

(11) **EP 4 092 531 A1**
(43) Date of publication of application: **23.11.2022**
(21) Application number: 22173682.0
(22) Date of filing: 17.05.2022
(51) Int. Cl.: G06F 9/48, G06F 9/50, G06F 9/54, G06F 9/455, G06F 11/34

(54) **SYSTEMS, METHODS, AND APPARATUS FOR COORDINATING COMPUTATION SYSTEMS**

(30) Priority: 21.05.2021 US 202163191919 P; 03.03.2022 US 202217686404; 30.07.2021 US 202163228013 P
(71) Applicant: Samsung Electronics Co., Ltd., Gyeonggi-do, 16677 (KR)
(72) Inventor: ZHANG, Tong, San Jose, CA 95134 (US); YANG, Jing, San Jose, CA 95134 (US); PITCHUMANI, Rekha, San Jose, CA 95134 (US)
(74) Representative: Kuhnen & Wacker Patent- und Rechtsanwaltsbüro PartG mbB

(57) **Abstract**

A method for computation may include performing a first computation using a first system, wherein the first computation may be based, at least in part, on a first computation basis, performing a second computation using a second system, wherein the second computation may be based, at least in part, on a second computation basis, and coordinating the first computation and the second computation. The first computation basis may include a clock basis, and the second computation basis may include an event basis. The first computation may include a first operation, the second computation may include a second operation, and the coordinating the first computation and the second computation may include coordinating the first computation and the second computation based on the first operation and the second operation. The first operation may include an application computation operation, and the second operation may include a device computation operation.

## Description

### TECHNICAL FIELD

This disclosure relates generally to synchronization, and more specifically to systems, methods, and apparatus for coordinating computation systems.

### BACKGROUND

A computation system may be used to perform a computation, for example, to simulate the operation of a device such as a storage device. A computation for a simulation may be run, for example, on a host system using one or more simulation techniques, for example, software simulation, hardware accelerated simulation, and/or the like. A computation for a simulation may enable a device to be simulated under different operating conditions, design constraints, and/or the like.

The above information disclosed in this Background section is only for enhancement of understanding of the background of the inventive principles and therefore it may contain information that does not constitute prior art.

### SUMMARY

According to an exemplary embodiment of the invention a method for computation may include performing a first computation using a first system, wherein the first computation may be based, at least in part, on a first computation basis, performing a second computation using a second system, wherein the second computation may be based, at least in part, on a second computation basis, and coordinating the first computation and the second computation. The first computation basis may include a clock basis, and the second computation basis may include an event basis. The first computation may include a first operation, the second computation may include a second operation, and the coordinating the first computation and the second computation may include coordinating the first computation and the second computation based on the first operation and the second operation. The first operation may include an application operation, and the second operation may include a device operation. The coordinating may include modifying the first computation. The modifying the first computation may include pausing the first computation. The coordinating may include modifying the second computation. The modifying the second computation may include pausing the second computation. The method may further include notifying the first computation, by the second computation, based on a status of the request. The coordinating the first computation and the second computation may include transferring a request from the first computation to the second computation. The request may be transferred, at least in part, using a shared memory. The performing the first computation may include performing the first computation using a performance scale factor. The performing the first computation may include simulating a clock. The first computation may include an application simulation, and the second computation may include a device simulation.

According to an exemplary embodiment of the invention a system may include a first computation system configured to perform a first computation, wherein the first computation may be based, at least in part, on a first computation basis, a second computation system configured to perform a second computation, wherein the second computation may be based, at least in part, on a second computation basis, and a coordination system configured to coordinate the first computation and the second computation. The first computation system may include an emulator, and the second computation system may include a device simulator. The emulator may include a software emulator. The first computation system may include a hardware virtual machine configured to operate the software emulator. The first computation system may include a proxy configured to communicate with the second computation system. The proxy may be configured to send a request to the second computation system. The second computation basis may include an event basis, and the second computation system may include a flow generator configured to communicate with the first computation system. The flow generator may be configured to receive a request from the first computation system, and generate an event based on the request. The second computation system may be configured to notify, based on a status of the request, the first computation system.

According to an exemplary embodiment of the invention a system may include a processor configured to perform a first computation, wherein the first computation may be based, at least in part, on a first computation basis, and a coordination system configured to coordinate the first computation and a second computation, wherein the second computation may be based, at least in part, on a second computation basis. The first computation may include a synthesized clock, the second computation may include an event, and the coordination system may include a ticker configured to coordinate the synthesized clock with the event. The first computation may be configured to communicate with the second computation using a shared memory.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
Fig. 1 illustrates an embodiment of a simulation scheme based on a virtualization platform in accordance with example embodiments of the disclosure.
Fig. 2 illustrates an embodiment of an event driven simulation scheme in accordance with example embodiments of the disclosure.
Fig. 3 illustrates an embodiment of a computation scheme in accordance with example embodiments of the disclosure.
Fig. 4 illustrates an example embodiment of a simulation scheme in accordance with example embodiments of the disclosure.
Fig. 5 illustrates another example embodiment of a simulation scheme illustrating some possible implementation details in accordance with example embodiments of the disclosure.
Fig. 6 illustrates an example embodiment of a method for synchronizing time between two simulation systems in accordance with example embodiments of the disclosure.
Fig. 7 illustrates an embodiment of a method for simulation in accordance with example embodiments of the disclosure.
Fig. 8 illustrates an embodiment of a computing system in accordance with example embodiments of the disclosure.

### DETAILED DESCRIPTION

Computations for emulations, evaluations, analyses, simulations, and/or the like, may operate based on various computation techniques. For example, an event driven computation such as an event driven simulation may be used to evaluate the performance of a device by simulating the status of one or more components of the device based on a sequence of events. However, an event driven simulation may not be able to simulate the operation of an application that may use the simulated device. The performance of the device, however, may depend on the interaction between the device and the application. Thus, it may be difficult to evaluate the actual performance of a device using an event driven simulation because an event driven simulation may not accurately simulate the interaction between the device and an application that may use the device.

As another example, a time driven computation such as a time driven simulation based, for example, on virtualization, may be used to simulate the performance of an application. However, a time driven simulation may not be able to adequately simulate the operation of a device that may be used by the application, for example, due to resource limitations. Thus, it may be difficult to evaluate the performance of a device using a time driven simulation.

A computation scheme in accordance with example embodiments of the disclosure may coordinate two computations that may be based on two computation techniques. In some embodiments, the two computations may include one or more design processes, emulations, evaluations, analyses, simulations, and/or the like, or a combination thereof. Depending on the implementation details, this may enable a computation scheme to adjust for interactions between one or more subjects of the two computations. For example, in some embodiments, an event driven computation such as an event driven simulation may be used to simulate a device, and a time driven computation such as a time driven simulation may be used to simulate an application that may use the device. The two computations may be coordinated (e.g., synchronized), for example, by exchanging input and/or output (I/O) requests, timing information, and/or the like. Depending on the implementation details, this may enable the event driven computation to provide a more accurate design, emulation, evaluation, simulation, analysis, and/or the like, of the performance of the device by adjusting the event driven computation based on one or more interactions with the time driven computation of the application.

In some embodiments, a computation scheme in accordance with the disclosure may include a time driven computation scheme (e.g., a simulation scheme) that may be implemented with a virtualization platform configured to run an application such as a user application, a benchmark application, and/or the like. The computation scheme may further include an event driven computation scheme (e.g., a simulation scheme) configured to simulate a device such as a storage device, an accelerator, and/or the like. The two computation schemes may communicate, for example, by using a proxy to exchange I/O requests, time information, and/or the like. In some embodiments, the proxy may enable the two computation schemes to communicate using a shared memory.

In some embodiments, if two computation schemes are operating in a state of reduced coordination, the operation of one or both of the computation schemes may be modified to improve the coordination between the schemes. In some embodiments, the two computation schemes may be synchronized, for example, by exchanging timing information at periodic synchronization points. For example, if at one or more synchronization points, a first one of the computation schemes is running faster than the other scheme, has advanced past the other system, or is otherwise in a state of reduced coordination with the other scheme, the operation of the first scheme may be paused, slowed down, or otherwise modified to enable the other system to catch up.

In some embodiments, a time driven computation scheme in accordance with the disclosure may implement a performance scaling factor. For example, a virtualization platform may implement a synthesized clock that may be used to respond to time queries from a guest operating system (OS) and/or application running on the virtualization platform. Depending on the implementation details, the use of a performance scaling factor may facilitate synchronization of a time driven simulation system and/or an event driven simulation system. Moreover, depending on the implementation details, the use of a performance scaling factor may enable the operation of a relatively high performance processor to be simulated using a relatively lower performance processor.

For purposes of illustration, some embodiments may be described in the context of one or more computation schemes that may be implemented with simulation schemes. However, the principles may be applied to computation schemes that may implement one or more schemes for emulation, evaluation, analysis, and/or the like, or any combination thereof.

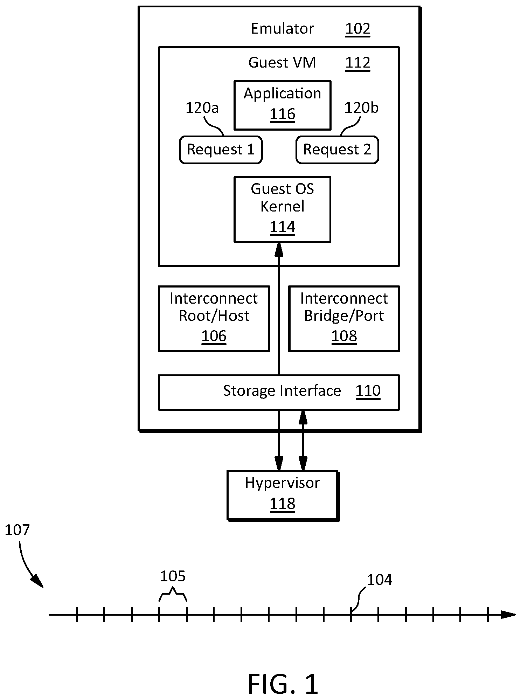

Fig. 1 illustrates an embodiment of a simulation scheme based on a virtualization platform in accordance with example embodiments of the disclosure. The system illustrated in Fig. 1 may include an emulator 102 that may run on a host computing system and may be configured to perform a software emulation of some or all of a computing system including one or more peripherals. In the embodiment illustrated in Fig. 1, the emulator 102 may be configured to emulate a central processing unit (CPU) and one or more peripherals including an interconnect (e.g., Peripheral Component Interconnect Express (PCIe)) root/host 106, an interconnect (e.g., PCIe) bridge/port 108, and/or a storage interface (e.g., a Nonvolatile Memory Express (NVMe) interface) 110. The emulator 102 may also be configured to run a guest virtual machine (VM) 112 that may run a guest OS having an OS kernel 114. The guest OS running on the guest VM 112 may run an application 116.

In some embodiments, the emulator 102 illustrated in Fig. 1 may run in a software CPU mode on a host computing system. In a software CPU mode, the emulator 102 may translate instructions of the application 116 from one type of CPU to the type of CPU used by the host system, and execute the translated instructions using software emulation.

In some embodiments, the emulator 102 illustrated in Fig. 1 may run in a hardware accelerated mode in which the emulator 102 may run on a virtual machine implemented by the host system. In the system illustrated in Fig. 1, a hypervisor 118 may be used to implement a VM on which the emulator 102 may run.

Whether operating in a software CPU mode or a hardware accelerated mode, the emulator 102 may provide the same or similar functional results when simulating the operation of the application 116 and/or host operating system. However, depending on the implementation details, a simulation may run faster and/or provide results faster when using hardware acceleration.

In some embodiments, the simulation system illustrated in Fig. 1 may be characterized as time driven because the operation of the emulator 102 (and thus the guest VM 112, the guest OS kernel 114, and the application 116) may progress based on successive cycles 104 of a system clock that may be uniformly spaced in time (e.g., may have a uniform period 105) as shown by timeline 107. In some embodiments, a system clock may be referred to as a global clock or global time. The system clock may be provided, for example, by the host computing system, a network, and/or the like.

The simulation system illustrated in Fig. 1 may be used, for example, to simulate the operation of an application 116 that may use a device that may be interfaced to the guest VM 112 through the NVMe interface 110. For example, in some embodiments, the system may simulate the application 116 as a database application that may access a storage device through the NVMe interface 110. In such an embodiment, application 116 may send one or more I/O requests 120a and 120b (which may be referred to collectively as 120) to the storage device through the NVMe interface 110.

In some embodiments, it may be possible to simulate a storage device using the simulation system illustrated in Fig. 1. However, the performance of a device simulation using a time driven system may depend on the performance of a hypervisor and/or the host system. In some embodiments, performing an accurate simulation of a device on a time driven system may involve more resources than may be provided by the hypervisor and/or the host system. For example, a functional simulation of an I/O device may involve overhead in the virtualization platform and/or a relatively long simulation stack. Thus, to complete a simulation in an acceptable amount of time, the system may only be able to use a simplified performance model of the device, which in turn, may provide inaccurate simulation results (e.g., may not provide accurate latency information).

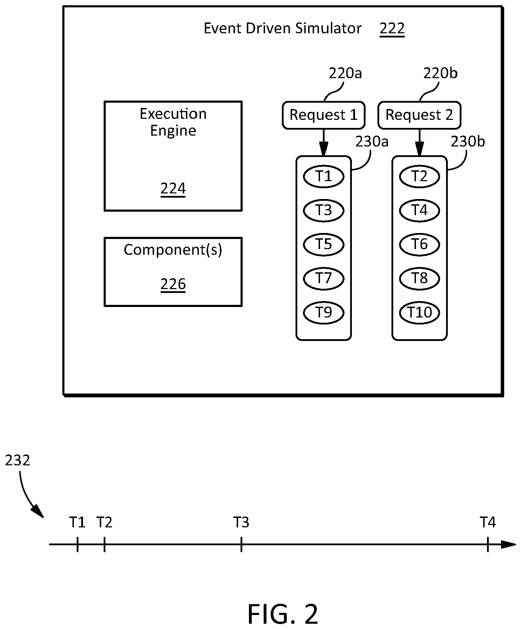

Fig. 2 illustrates an embodiment of an event driven simulation scheme in accordance with example embodiments of the disclosure. The embodiment illustrated in Fig. 2 may include an event driven simulator 222 having an execution engine 224. The event driven simulator 222 may simulate the operation of one or more components 226 of the subject of the simulation, (e.g., a device such as a storage device, accelerator, and/or the like). The event driven simulator 222 may register one or more events (e.g.., 230a and/or 230b) for one or more requests (e.g., 220a and/or 220b). One or more (e.g., each) of the events 220a and/or 220b (which may also be identified as T1, T2, ..., T10 based, for example, on an order of execution) may have a fire time that may be determined, for example, based on a status of one or more of the components 226. The execution engine 224 may execute the events T1, T2, ..., T10 in sequence based on the order of their respective fire times. Thus, in some embodiments, the simulator time may be the fire time of the currently executing event.

In some embodiments, even though the event driven simulator 222 may execute one or more events in sequence, the time between executing events may not be uniform as shown in timeline 232 where the space between events T1, T2, T3, and T4 may represent the amount of time between events (non necessarily to scale). Thus, the simulation time may not be directly related to the time between events.

In some embodiments, an event driven simulation scheme such as that illustrated in Fig. 2 may simulate the status of the one or more components 226 of a system in parallel (e.g., at the same time). Thus, event driven simulator 222 may enable a relatively complex system (e.g., a device such as a storage device) to be simulated relatively efficiently (e.g., compared to a time driven system). However, in some embodiments, an application that may use a device simulated by the event driven simulator 222 may not be able to run in conjunction with an event driven simulation scheme. An event driven simulation scheme may, therefore, not be able to be adjusted based on interactions between the device being simulated and an application that may use the device. Thus, depending on the implementation details, it may be difficult to evaluate the actual performance of a device using an event driven simulation, for example, where the device may interact with an application.

Moreover, although the time driven simulation scheme illustrated in Fig. 1 may be used to simulate the operation of an application, and the event driven simulation scheme illustrated in Fig. 2 may be used to simulate the operation of a device, it may be difficult to combine the two simulations, for example, because the two simulation systems may operate independently, (e.g., they may not be synchronized with each other), and/or because it may be difficult to exchange information (e.g., requests and/or responses) between the two simulation systems.

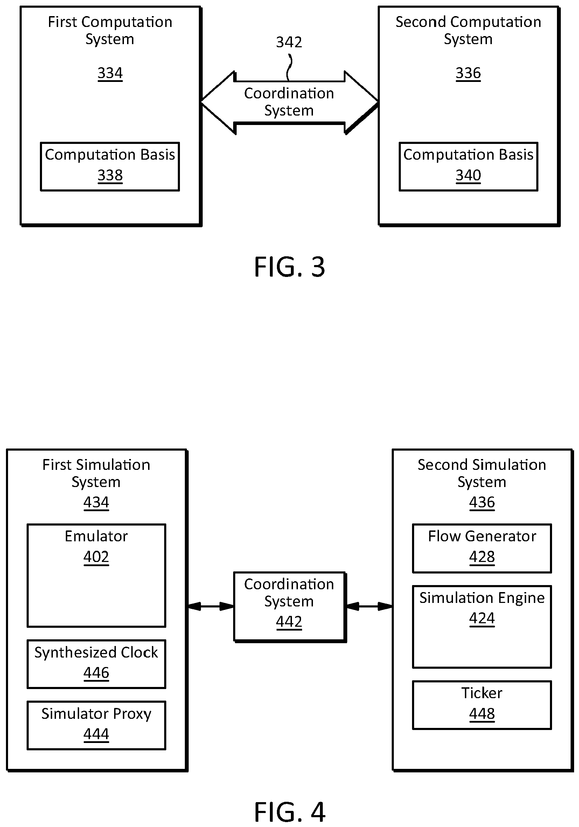

Fig. 3 illustrates an embodiment of a computation scheme in accordance with example embodiments of the disclosure. The embodiment illustrated in Fig. 3 may include a first computation system 334 and a second computation system 336. The first computation system 334 may operate based, at least in part, on a first computation basis 338. The second computation system 336 may operate based, at least in part, on a second computation basis 340. The first computation system 334 and second computation system 336 may be coordinated using a coordination system 342. Depending on the implementation details, the coordination system 342 may enable the computation scheme to adjust for interactions between the subjects of the two computations.

Either of the first computation system 334 and/or second computation system 336 may be implemented with hardware, software, or a combination thereof. For example, in some embodiments, a computation system may be implemented with general computer hardware (e.g., with a general purpose CPU with any number of cores) running one or more computation applications on any type of operating system. In some embodiments, a computation system may be implemented with specialized computation hardware such as a computation workstation, minicomputer, mainframe, and/or the like. In some embodiments, a computation workstation may include a general purpose GPU with one or more hardware accelerators such as a general purpose graphics processing unit (GPGPU).

Either of the first computation basis 338 and/or second computation basis 340 may implement any type of computation basis or combination thereof including, for example, one or more simulation bases such as discrete-event simulation (e.g., event driven, process-oriented, and/or distributed simulation), continuous-valued simulation, stochastic simulation, trace-driven simulation, and/or the like, using any type of simulation language. Additional examples of a simulation basis may include software emulation (e.g., Quick Emulation (QEMU)) with and/or without hardware acceleration, hardware and/or software virtualization using any virtualization platform such as Linux Kernel-based Virtual Machine (KVM), VirtualBox, VMware, and/or the like.

In some embodiments, either of the first computation system 334 and/or second computation system 336 may run computation software, for example, simulation software for simulating a storage device such as a solid state drive (SSD). Examples of storage device simulation software may include MQSim (for multi-queue (MQ) SSDs), FlashSim, SSDSim, Virtual SSD Simulator (VSSIM), Amber, GEM5, and/or the like.

The coordination system 342 may be implemented with any type of hardware, software, or combination thereof that may enable the first computation system 334 and second computation system 336 to coordinate (e.g., synchronize) their operation. For example, in some embodiments, the coordination system 342 may be implemented, at least in part, with shared memory through which the first computation system 334 and second computation system 336 may exchange I/O requests, timing information, and/or the like. As another example, in some embodiments, the coordination system 342 may be implemented, at least in part, with an operating system feature that may enable communication between software elements such as Inter-Process Communication (IPC) in Linux. As a further example, the coordination system 342 may be implemented, at least in part, with any type of communication interface, protocol, and/or the like including PCIe, NVMe, NVMe-over-fabric (NVMe-oF), Compute Express Link (CXL) Ethernet, Transmission Control Protocol/Internet Protocol (TCP/IP), Direct Memory Access (DMA) Remote DMA (RDMA), RDMA over Converged Ethernet (ROCE), FibreChannel, InfiniBand, and/or the like, or any combination thereof.

In some embodiments, the first computation system 334 and second computation system 336 may be implemented at least partially on separate hardware platforms. In some embodiments, the first computation system 334 and second computation system 336 may be implemented at least partially on a common hardware platform. For example, in some embodiments, the first computation system 334 and second computation system 336 may be implemented on a common host system where the first computation system 334 may be implemented with a virtualization system (e.g., QEMU running with or without hardware acceleration (e.g., KVM), and the second computation system 336 may be implemented with a dedicated software based computation, for example, a dedicated software based simulation such as MQSim.

As mentioned above, for purposes of illustration, some embodiments may be described in the context of one or more computation schemes that may be implemented with simulation schemes. However, the principles may be applied to computation schemes that may implement one or more schemes for emulation, evaluation, analysis, and/or the like, or any combination thereof. Moreover, for purposes of illustration, some example embodiments may be described in the context of some specific implementation details. For example, some example embodiments may be described in the context of a simulation scheme in which a first simulation system may implement a time driven simulation using a virtualization platform, and a second simulation system may implement an event driven software simulation. However, the inventive principles are not limited to these or any other implementation details.

Fig. 4 illustrates an example embodiment of a simulation scheme in accordance with example embodiments of the disclosure. The embodiment illustrated in Fig. 4 may be used, for example, to implement any simulation scheme disclosed herein, including an embodiment of the computation scheme illustrated in Fig. 3.

Referring to Fig. 4, the simulation scheme illustrated in Fig. 4 may include a first simulation system 434, a second simulation system 436, and a coordination system 442. The first simulation system 434 may be implemented with a virtualization platform including an emulator 402 that may be used, for example, to emulate a computer system that may run an application.

The first simulation system 434 may also include a simulator proxy 444 that may enable the first simulation system 434 to communicate with the second simulation system 436. In some embodiments, the simulator proxy 444 may emulate an interface (e.g., an NVMe interface) to the subject of a simulation (e.g. a device) simulated by the second simulation system 436. The simulator proxy 444 may enable an application running on the emulator 402 to communicate with the second simulation system 436, for example, by sending and/or receiving I/O requests and/or completions to and/or from a device being simulated by the second simulation system 436.

The first simulation system 434 may also include a synthesized clock 446 that may be used to respond to time queries from a guest OS and/or application running on the first simulation system 434. For example, in some embodiments, the synthesized clock 446 may be used to replace one or more clock sources such as a real-time-clock (RTC), a high-precision event timer (HPET), an Advanced Configuration and Power Interface (ACPI) clock, and/or the like, for the guest OS and/or application. The use of a synthesized clock may enable the first simulation system 434 to control one or more (e.g. all) aspects of time for the simulation. For example, the use of a synthesized clock may provide a performance scaling factor that may facilitate synchronization of a time driven simulation in the first simulation system 434 with an event driven simulation in the second simulation system 436.

In some embodiments, the second simulation system 436 may implement an event driven simulation (e.g. a software simulation) that may include a flow generator 428. The flow generator 428 may generate one or more events based, for example, on a request received from an application running on the emulator 402 through the simulator proxy 444. In some embodiments, the flow generator 428 may convert a request received from the emulator 402 to a format that may be understood and/or used by the second simulation system 436. In some embodiments, one or more events may be generated by one or more components of a device being simulated by the second simulation system 436 as the simulator progresses, however, one or more initial events and/or requests may be created by the flow generator 428 (e.g., based on a request received from the simulator proxy 444). In some embodiments, the flow generator 428 may be considered a counterpart to the simulator proxy 444 to enable communication between the first simulation system 434 and the second simulation system 436.

The second simulation system 436 may include an execution engine 424 that may be implemented, for example, as an event driven execution engine that may execute events generated by the flow generator 428, one or more components of a device under simulation, and/or the like.

The second simulation system 436 may include a ticker 448. In some embodiments, the ticker 448 may synchronize time between a guest OS running on the emulator 402 and an event driven simulation running on the second simulation system 436. For example, in some embodiments, the ticker 448 may control how fast and/or how far the synthesized clock 446 may advance. Thus, in some embodiments, the ticker 448 may enable the second simulation system 436 to control time for the emulator 402.

In some embodiments, the coordination system 442 may be implemented with a shared memory space that may be accessible to both simulation systems 434 and 436. In some embodiments, a shared memory space may include one or more registers (e.g., status registers, control registers, and/or the like), queues (e.g. submission queues, completion queues, and/or the like), buffers, and/or the like.

In some embodiments, the simulation scheme illustrated in Fig. 4 may support a time driven simulation of an application using the first simulation system 434 and an event driven simulation of a device used by the application using the second simulation system 436. The two simulations may be coordinated (e.g., synchronized) using a coordination system 442 which may enable the first simulation system 434 and/or the second simulation system 436 to adjust for interactions between the subjects of the two simulations. Depending on the implementation details, this may enable the simulation scheme illustrated in Fig. 4 to provide a more accurate performance analysis (e.g. latency model) of a device simulated by the second simulation system 436.

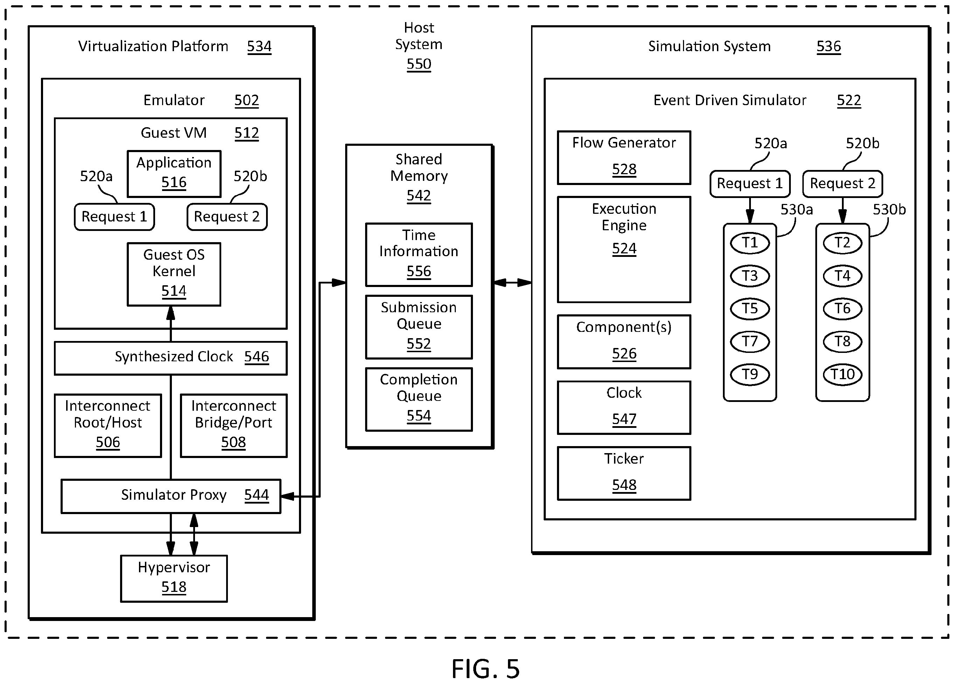

Fig. 5 illustrates another example embodiment of a simulation scheme illustrating some possible implementation details in accordance with example embodiments of the disclosure. The embodiment illustrated in Fig. 5 may be used, for example, to implement any simulation scheme disclosed herein, including an embodiment of the computation scheme illustrated in Fig. 3 and/or an embodiment of the simulation scheme illustrated in Fig. 4. For purposes of illustration, the embodiment illustrated in Fig. 5 may be described in the context of some specific implementation details, however, the inventive principles are not limited to these or any other implementation details.

In the embodiment illustrated in Fig. 5, a first simulation system 534 and a second simulation system 536 may be implemented on a host computer system 550 such as a workstation, a server, and/or the like. In other implementations, however, separate hosts may be used for one or more portions of the two simulation systems 534 and 536.

The first simulation system 534 may be implemented as a time driven system using a virtualization platform that may include an emulator 502 which, in this example, may be implemented with QEMU. Thus, the first simulation system 534 may be referred to as a virtualization platform. The emulator 502 may be configured to run a guest VM 512 that may run a guest OS having an OS kernel 514. In some embodiments, the emulator 502 may run in a software CPU mode and/or a hardware accelerated mode in which the emulator 502 may run on a virtual machine implemented by the host system 550. For example, the first simulation system 534 may include a hypervisor 518 that may be used to implement a VM on which the emulator 502 may run. Whether operating in a software CPU mode or a hardware accelerated mode, the emulator 502 may provide the same or similar functional results, however, depending on the implementation details, a simulation may run faster using hardware acceleration.

The guest OS running on the guest VM 512 may run an application 516. Examples of applications may include a user application (e.g., a database application), a benchmark application, and/or the like. In some embodiments, the application 516 may generate one or more I/O requests (e.g. NVMe requests) 520a and/or 520b that may provide a simulated load, for example, for a storage device that may be simulated by the second simulation system 536. In some embodiments, it may be useful to use a benchmark application such as Flexible I/O Tester (FIO) to generate I/O requests for evaluating the performance of a storage device that may be simulated by the second simulation system 536.

The first simulation system 534 may include a synthesized clock 546 to generate one or more clocks (e.g., synthesized versions of RTC, HPET, ACPI, and/or the like) that may be used to respond to time queries from a guest OS kernel 514 and/or application 516 to thereby control the time scale of the simulation performed by the emulator 502. Depending on the implementation details, this may enable the embodiment illustrated in Fig. 5 to implement a performance scaling factor. For example, if a device being simulated by the second simulation system 536 is capable of executing 1,000 instructions per second (IPS), the synthesized clock 546 may be controlled to appear as boosted performance (e.g., 2,000 IPS).

The first simulation system 534 may also include a simulator proxy 544 that may enable the application 516 to communicate with a storage device that may be simulated by the second simulation system 536. In the example embodiment illustrated in Fig. 5, the simulator proxy 544 may emulate a storage interface (e.g., an NVMe interface) to enable the application 516 to provide a simulated load of I/O requests to a storage device that may be simulated by the second simulation system 536. In some embodiments, the simulator proxy 544 may redirect I/O requests and/or responses from/to the application 516 to/from the second simulation system 536. In some embodiments, the emulator 502 may be configured to emulate a PCIe root/host 506, and/or a PCIe bridge/port 508.

The second simulation system 536 may be implemented with an event driven simulator 522, for example, a software simulator running on the host system 550. For purposes of illustration, the event driven simulator 522 may be assumed to be simulating a storage device using, for example, simulation software based on MQSim. Therefore, the event driven simulator 522 may be referred to as a storage device simulator or an SSD simulator. However, the event driven simulator 522 may be used to simulate any subject including any devices other than storage devices.

The event driven simulator 522 may include an event driven execution engine 524, a flow generator 528, and/or one or more components 526 of a storage device being simulated. The flow generator 528 may generate one or more events in one or more event lists (e.g., 530a and/or 530b) for one or more requests (e.g., 520a and/or 520b) received from the application 516. One or more (e.g., each) of the events 520a and/or 520b (which may also be identified as T1, T2, ..., T10 based, for example, on an order of execution) may have a fire time that may be determined, for example, based on a status of one or more of the components 526. The execution engine 524 may execute the events T1, T2, ..., T10 in sequence based on the order of their respective fire times.

In some embodiments, the second simulation system 536 may include a clock component 547 that may generate one or more clock events and register them in an event list (e.g., 530a and/or 530b). The one or more clock events may be executed, for example, at time points that may be defined at the registration time. In some embodiments, when a clock event is executed, it may perform one or more of the following tasks: (1) provide (e.g., print) runtime statistic regarding the subject of the simulation (e.g., a storage device) such as read and/or write operations per second, latency, bandwidth, and/or the like; and/or (2) pause the second simulation system 536, for example, continuing to add one or more additional clock events (e.g., at the same point in time).

The second simulation system 536 may also include a ticker 548 that may synchronize time between a guest OS kernel 514 running on the emulator 502 and the event driven simulator 522 running on the second simulation system 536. For example, in some embodiments, the ticker 548 may control how fast and/or how far the synthesized clock 546 may advance. Thus, in some embodiments, the ticker 548 may enable the second simulation system 536 to control time for the emulator 502. In some embodiments, the ticker 548 may be implemented as part of the event driven simulator 522.

In the embodiment illustrated in Fig. 5, a coordination system may be implemented with a shared memory 542 that may be accessible to both simulation systems 534 and 536. For example, the virtualization platform of the first simulation system 534 may run in one or more first processes of the host system 550, and the event driven simulator 522 may run in one or more second processes of the host system 550. In some embodiments, the shared memory 542 may be located in one or more memory areas that may be accessible to the first and second processes.

In some embodiments, the shared memory 542 may include one or more submission queues (e.g., NVMe submission queues) 552 and/or one or more completion queues (e.g., NVMe completion queues) 554. In some embodiments, the shared memory 542 may include one or more registers, queues, buffers, and/or the like 556 to transfer time information between the first simulation system 534 and the second simulation system 536.

Depending on the implementation details, the simulation scheme illustrated in Fig. 5 may be configured to connect (e.g., integrate) an event driven simulation of a storage device with a time driven virtualization system to provide a performance model of a simulated device, including interactions with an application, on a virtualization platform. In some embodiments, the event driven simulator 522 may function as a simulated device on the virtualization platform 534. Depending on the implementation details, this may provide an accurate technique for evaluating the performance (e.g., latency) of the simulated device (e.g., a storage device).

Referring again to Fig. 5, an embodiment of a simulation of a storage device and application 516 may proceed as follows. In some embodiments, the virtualization platform 534 and event driven simulator 536 may run on different processes of the host system 550 and communicate through the shared memory 542. The synthesized clock 546 may be synchronized with the event driven storage device simulator 522 by the ticker 548. The guest OS kernel 514 may communicate with virtual hardware in the virtualization platform 534 to obtain timestamps and/or service I/O requests. The ticker 548 may synchronize timestamps between the virtualization platform 534 and event driven storage device simulator 536. The I/O requests 520a and/or 520b from application 516 may be redirected by the simulation proxy 544 to the event driven storage device simulator 522 through one or more submission queues 552 in the shared memory 542.

In some embodiments, a process for handling an I/O request submission may proceed as follows. The application 516 may interact with the guest OS kernel 514 to send an I/O request to simulator proxy 544. The simulator proxy 544 may forward the I/O request to the event driven simulator 522. A user request event may be created, for example, by the flow generator 528 based on receiving the I/O request from the simulator proxy 544. The user request event may be executed by the execution engine 524 in sequence with any other events that may be pending.

In some embodiments, a process for handling an I/O request completion may proceed as follows. Based on a completion of the user request event by the execution engine 524, the event driven simulator 522 may notify the simulator proxy 544, for example, by placing a completed I/O request in a corresponding completion queue 554 in the shared memory 542. The simulator proxy 544 may then place the completed I/O request in a corresponding completion queue of the simulated virtual device in the guest VM. The virtual device may then assert an interrupt request (IRQ) to notify the guest OS kernel 514. Data associated with the I/O request may then be transferred to the application 516, for example, through a storage stack running on the guest OS.

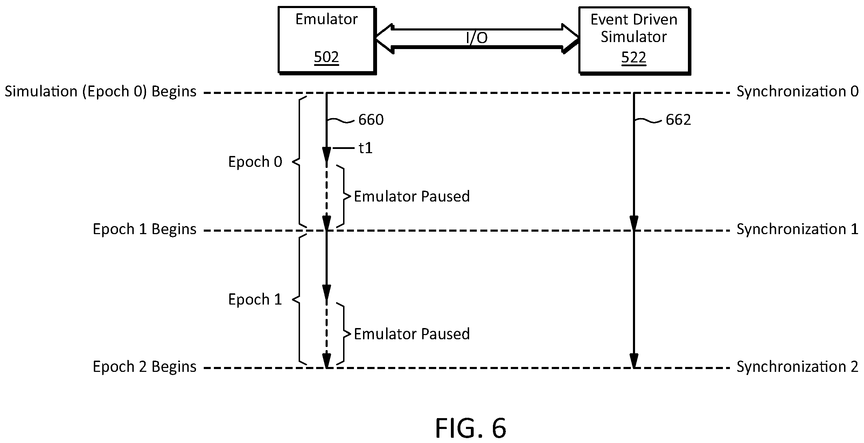

Fig. 6 illustrates an example embodiment of a method for synchronizing time between two simulation systems in accordance with example embodiments of the disclosure. The embodiment illustrated in Fig. 6 may be described in the context of the simulation scheme illustrated in Fig. 5, but the inventive principles are not limited to any particular implementation details.

Referring to Fig. 6, time may progress in the downward direction. Synchronized simulations on both the emulator 502 (running on the virtualization platform 534) and the event driven simulator 522 may begin at Synchronization 0. The simulations may proceed in time increments having a granularity referred to as an epoch. Thus, Epoch 0 may begin at Synchronization 0.

Time at the emulator 502 (e.g., time at the guest VM which may also be referred to as guest time) and time at the event driven simulator 522 may be synchronized periodically, for example, at synchronizations (Synchronization 0, Synchronization 1,...) where two successive synchronizations may be separated by an epoch.

At the beginning of an epoch, the emulator 502 may begin to perform one or more time driven simulation operations 660, and the event driven simulator 522 may begin to perform one or more event driven simulation operations 662. In some embodiments, the ticker 548 may keep track of the execution speed and/or progress of the emulator 502 and/or event driven simulator 522 during an epoch.

At synchronization point, the ticker 548 may determine if one of the simulations is running faster (e.g., has progressed further) than the other. If one of the simulations is running faster (e.g., has progressed further) than the other, the ticker 548 may modify the operation of one or both of the simulations to resynchronize the simulations.

For example, referring to Fig. 6, in the absence of any adjustment, Synchronization 1 may be scheduled to occur at real time t1. However, if at real time t1, if the ticker 548 determines that the emulator 502 has progressed further than the event driven simulator 522, the ticker 548 may pause the emulator 502 until the event driven simulator 522 may catch up at Synchronization 1. In some embodiments, the ticker 548 may pause the emulator 502, for example, by pausing the guest OS kernel 514 and/or the synthesized clock 546. Depending on the implementation details, this may prevent an incorrect performance calculation. For example, in the absence of synchronization by the ticker 548, if at Synchronization 1, the event driven simulator 522 has not returned a result expected by the emulator 502 at Synchronization 1, the emulator 502 may proceed to Synchronization 2 before it receives the expected result. A performance metric of I/O operations per unit time may then be calculated as 1/(Epoch 0 + Epoch 1) rather than 1/(Epoch 0) which would be the correct result if the emulator 502 received the expected result at Synchronization 1.

Similarly, if at real time t1, the ticker 548 determines that the event driven simulator 522 has progressed further than the emulator 502, the ticker 548 may pause the event driven simulator 522 until the emulator 502 may catch up at Synchronization 1. In some embodiments, the ticker 548 may pause the event driven simulator 522, for example, by inserting one or more additional clock events at the current time point in event lists 530a and/or 530b. Depending on the implementation details, this may prevent an incorrect performance calculation. For example, if the ticker 548 determines that the event driven simulation 522 is running fast enough to keep up with the emulator 502, the ticker 548 may prevent the event driven simulation 522 from processing future events until the ticker determines it may be allowed by the clock of the emulator. Depending on the implementation details, this may prevent the event driven simulation 522 from returning an I/O request that the emulator 502 may not expect until a future time (which may cause the emulator 502 to become confused and/or malfunction).

At Synchronization 1, after resynchronizing the two simulations, the ticker may allow Epoch 1 to begin at which point emulator 502 may begin to perform one or more time driven simulation operations 660, and the event driven simulator 522 may begin to perform one or more event driven simulation operations 662.

Because of adjustments the ticker 548 may make to synchronize the simulations, the time illustrated in Fig. 6 may represent the time perceived by the simulations rather than real time.

In some embodiments, setting a time increment for an epoch may involve one or more tradeoffs between accuracy, computing resources, and/or the like. For example, setting a relatively short epoch time (e.g., approximately as long as the average time between execution of events in the event driven simulator 522) may provide better accuracy but require more computing resources. As another example, setting a relatively long epoch time (e.g., long enough to allow multiple event execution times during an epoch) may provide adequate accuracy and reduce the amount of computing resources required.

In some embodiments, and depending on the implementation details, a simulation scheme in accordance with example embodiments of the disclosure may implement any number of the following features and/or provide any number of the following benefits.

In some embodiments, time may be synchronized between a virtualization platform and an event driven simulator such that a user application may simulate the same or similar performance as running on real device.

In some embodiments, a time synchronization mechanism may connect an event driven simulator with a virtualization system. In such an embodiment, time may be synchronized periodically between the vitalization platform and event driven simulator, for example, a one or more pre-defined time periods.

In some embodiments, a shared memory may be used for time and I/O request exchange between a vitalization platform and an event driven simulator at one or more synchronization points, at which point the faster system, if any, may be paused to wait for the slower system to catch up.

Some embodiments may provide a user the ability to run a storage stack (e.g., a full storage stack) in real time, and perform complex device simulation in a manner that may provide realistic high IO performance to the application.

Some embodiments may enable a full system to be simulated, for example, a device, an application that may be used by the device, and/or one or more interactions between the device and the application.

Some embodiments may enable the performance of a simulation subject to be calculated, for example, using the delta-t (e.g., change in time) between time stamps from a synthesized clock.

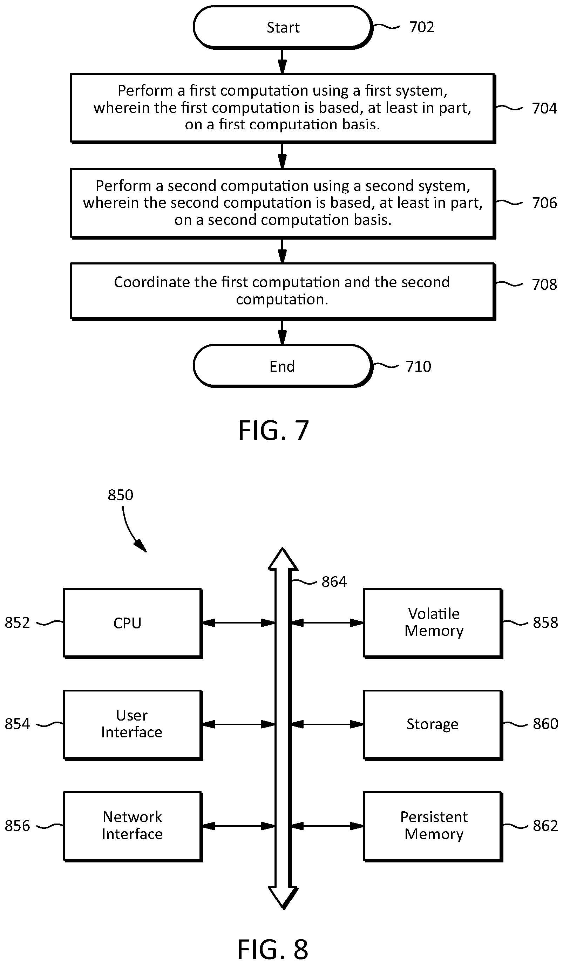

Fig. 7 illustrates an embodiment of a method for computation in accordance with example embodiments of the disclosure. The method may begin at operation 702. At operation 704, the method may perform a first computation using a first system, wherein the first computation is based, at least in part, on a first computation basis. For example, a computation basis may be a time driven basis, an event driven basis, and/or the like. At operation 706, the method may perform a second computation using a second system, wherein the second computation is based, at least in part, on a second computation basis. At operation 708, the method may coordinate the first computation and the second computation. The first computation and the second computation may be coordinated, for example, by exchanging timing information, I/O requests, and/or the like, using a shared memory location.

Fig. 8 illustrates an embodiment of a computing system according to this disclosure. The system 850 illustrated in Fig. 8 may be used to implement any or all of the systems, methods, and/or apparatus described in this disclosure. For example, the system 850 may be used to implement the host system 550 illustrated in Fig. 5.

Referring to Fig. 8, the system 850 may include a central processing unit (CPU) 852, a user interface 854, a network interface 856, volatile memory 858, storage 860, and persistent memory 862. However, the principles of this disclosure are not limited to implementation with any of the components illustrated in Fig. 8 but may be realized with any suitable hardware, software or combinations thereof. In different embodiments, the system may omit any of these components or may include duplicates, or any additional numbers of, any of the components, as well as any other types of components to implement any of the methods and/or apparatus described in this disclosure.

The CPU 852 may include any number of cores, caches, bus and/or interconnect interfaces and/or controllers. The volatile memory 858 may include any arrangement of dynamic and/or static random access memory (RAM), and/or the like. The storage 860 may include hard disk drives (HDDs), solid state drives (SSDs), and/or any other type of data storage devices or any combination thereof. The persistent memory 862 may include any type of nonvolatile memory device such as non-volatile dual in-line memory module (NVDIMM), multilayered memory, battery backed RAM, and/or the like.

The user interface 854 may include any type of human interface devices such as keyboards, mice, monitors, video capture or transmission devices, microphones, speakers, touchscreens, and/or the like as well as any virtualized or remote versions of such devices. The network interface 856 may include one or more adapters or other apparatus to communicate through Ethernet, Wi-Fi, Bluetooth, or any other computer networking arrangement to enable the components to communicate through physical and/or logical networks, such as an intranet, the Internet, local area networks, wide area networks, and/or the like.

Any or all of the components of the system 850 may be interconnected through a system bus 864 which may collectively refer to various interfaces including power buses, address and data buses, high-speed interconnects such as Serial AT Attachment (SATA), Peripheral Component Interconnect (PCI), Peripheral Component Interconnect Express (PCI-e), System Management Bus (SMB), and any other types of interfaces that may enable the components to work together, either locally at one location, and/or distributed between different locations.

The system 850 may also include various chipsets, interfaces, adapters, glue logic, embedded controllers, such as programmable or non-programmable logic devices or arrays, application specific integrated circuits (ASICs), embedded computers, smart cards, and the like, arranged to enable the various components of the system 850 to work together to implement any or all of the methods and/or apparatus described in this disclosure. Any of the components of the system 850 may be implemented with hardware, software, firmware, or any combination thereof. In some embodiments, any or all of the components may be realized in a virtualized form and/or in a cloud-based implementation with flexible provisioning of resources, for example within a data center, or distributed throughout multiple data centers.

The embodiment illustrated in Fig. 8, as well as all of the other embodiments described herein, are example operations and/or components. In some embodiments, some operations and/or components may be omitted and/or other operations and/or components may be included. Moreover, in some embodiments, the temporal and/or spatial order of the operations and/or components may be varied. Although some components and/or operations may be illustrated as individual components, in some embodiments, some components and/or operations shown separately may be integrated into single components and/or operations, and/or some components and/or operations shown as single components and/or operations may be implemented with multiple components and/or operations.

Some embodiments disclosed above have been described in the context of various implementation details, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, and/or the like, but these terms also encompass embodiments in which a specific process, operation, and/or the like may be implemented with multiple processes, operations, and/or the like, or in which multiple processes, operations, and/or the like may be integrated into a single process, step, and/or the like. A reference to a component or element may refer to only a portion of the component or element. For example, a reference to a block may refer to the entire block or one or more subblocks. The use of terms such as "first" and "second" in this disclosure and the claims may only be for purposes of distinguishing the elements they modify and may not indicate any spatial or temporal order unless apparent otherwise from context. In some embodiments, a reference to a thing may refer to at least a portion of the thing, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner.

The various details and embodiments described above may be combined to produce additional embodiments according to the inventive principles of this patent disclosure. Since the inventive principles of this patent disclosure may be modified in arrangement and detail without departing from the inventive concepts, such changes and modifications are considered to fall within the scope of the following claims.

## Claims

1. A method for computation, the method comprising:
performing a first computation using a first system, wherein the first computation is based, at least in part, on a first computation basis;
performing a second computation using a second system, wherein the second computation is based, at least in part, on a second computation basis; and
coordinating the first computation and the second computation.

2. The method of claim 1, wherein:
the first computation basis comprises a clock basis; and
the second computation basis comprises an event basis.

3. The method of claim 1 or 2, wherein:
the first computation comprises a first operation;
the second computation comprises a second operation; and
the coordinating the first computation and the second computation comprises coordinating the first computation and the second computation based on the first operation and the second operation.

4. The method of claim 3, wherein:
the first operation comprises an application operation; and
the second operation comprises a device operation.

5. The method of any one of claims 1 to 4, wherein the coordinating comprises modifying the first computation.

6. The method of claim 5, wherein the modifying the first computation comprises changing an operating speed the first computation.

7. The method of any one of claims 1 to 6, wherein the coordinating the first computation and the second computation comprises transferring a request from the first computation to the second computation.

8. The method of claim 7, further comprising notifying the first computation, by the second computation, based on a status of the request.

9. The method of claim 7 or 8, wherein the request is transferred, at least in part, using a shared memory.

10. The method of any one of claims 1 to 9, wherein the performing the first computation comprises performing the first computation using a performance scale factor.

11. The method of any one of claims 1 to 10, wherein the performing the first computation comprises simulating a clock.

12. The method of any one of claims 1 to 11, wherein:
the first computation comprises an application simulation; and
the second computation comprises a device simulation.

13. A system comprising:
a first computation system configured to perform a first computation, wherein the first computation is based, at least in part, on a first computation basis;
a second computation system configured to perform a second computation, wherein the second computation is based, at least in part, on a second computation basis; and
a coordination system configured to coordinate the first computation and the second computation.

14. The system of claim 13, wherein
the first computation system comprises an emulator; and
the second computation system comprises a device simulator.

15. The system of claim 14, wherein:
the emulator comprises a software emulator; and
the device simulator comprises a hardware virtual machine configured to operate the software emulator.
